# FASCICULE DE BREVET EUROPEEN

(11) **EP 2 406 197 B1**
(45) Date de publication et mention de la délivrance du brevet: **16.05.2018**
(21) Numéro de dépôt: 10714927.0
(22) Date de dépôt: 08.03.2010
(51) Int. Cl.: C03C 17/36

(54) **SUBSTRAT MUNI D'UN EMPILEMENT A PROPRIETES THERMIQUES COMPORTANT DES COUCHES A HAUT INDICE DE REFRACTION ET SON UTILISATION**
SUBSTRAT MIT EINEM STAPEL MIT THERMISCHEN EIGENSCHAFTEN UND SCHICHTEN MIT HOHEM BRECHUNGSINDEX UND DESSEN VERWENDUNG
SUBSTRATE PROVIDED WITH A STACK WITH THERMAL PROPERTIES AND COMPRISING HIGH REFRACTIVE INDEX LAYERS AND ITS USE

(30) Priorité: 09.03.2009 FR 0951458
(43) Date de publication de la demande: 18.01.2012
(73) Titulaire: Saint-Gobain Glass France, 92400 Courbevoie (FR)
(72) Inventeur: GERARDIN, Hadia, 75012 Paris (FR); REYMOND, Vincent, F-92160 Antony (FR)
(74) Mandataire: Saint-Gobain Recherche
(86) Numéro de dépôt international: PCT/FR2010/050391
(87) Numéro de publication internationale: WO 2010/103224

(56) Documents cités:
- DE-A1- 19 751 711
- US-A- 3 901 997
- US-A- 5 837 361
- US-A1- 2006 246 301

## Description

L'invention concerne un substrat transparent notamment en un matériau rigide minéral comme le verre, ledit substrat étant revêtu d'un empilement de couches minces comprenant une couche fonctionnelle de type métallique pouvant agir sur le rayonnement solaire et/ou le rayonnement infrarouge de grande longueur d'onde.

L'invention concerne plus particulièrement l'utilisation de tels substrats pour fabriquer des vitrages d'isolation thermique et/ou de protection solaire. Ces vitrages peuvent être destinés aussi bien à équiper les bâtiments que les véhicules, en vue notamment de diminuer l'effort de climatisation et/ou d'empêcher une surchauffe excessive (vitrages dits « de contrôle solaire ») et/ou diminuer la quantité d'énergie dissipée vers l'extérieur (vitrages dits « bas émissifs ») entraînée par l'importance toujours croissante des surfaces vitrées dans les bâtiments et les habitacles de véhicules.

Ces vitrages peuvent par ailleurs être intégrés dans des vitrages présentant des fonctionnalités particulières, comme par exemple des vitrages chauffants ou des vitrages électrochromes.

Un type d'empilement de couches connu pour conférer aux substrats de telles propriétés est constitué d'une couche métallique fonctionnelle à propriétés de réflexion dans l'infrarouge et/ou dans le rayonnement solaire, notamment une couche fonctionnelle métallique à base d'argent ou d'alliage métallique contenant de l'argent.

Dans ce type d'empilement, la couche fonctionnelle se trouve ainsi disposée entre deux revêtements antireflets comportant chacun en général plusieurs couches qui sont chacune en un matériau diélectrique du type nitrure et notamment nitrure de silicium ou d'aluminium ou du type oxyde. Du point de vue optique, le but de ces revêtements qui encadrent la couche fonctionnelle métallique est « d'antirefléter » cette couche fonctionnelle métallique.

Un revêtement de blocage est toutefois intercalé parfois entre un ou chaque revêtement antireflet et la couche métallique fonctionnelle, le revêtement de blocage est disposé sous la couche fonctionnelle en direction du substrat et la protège lors d'un éventuel traitement thermique à haute température, du type bombage et/ou trempe et le revêtement de blocage disposé sur la couche fonctionnelle à l'opposé du substrat protège cette couche d'une éventuelle dégradation lors du dépôt du revêtement antireflet supérieur et lors d'un éventuel traitement thermique à haute température, du type bombage et/ou trempe.

Il est connu, par exemple de la demande de brevet N° EP 678 484 qu'une couche diélectrique à haut indice de réfraction, par exemple en oxyde de niobium ou en oxyde de titane, disposée entre le substrat et la couche fonctionnelle métallique peut permettre d'antireflèter la couche fonctionnelle métallique.

Pour améliorer encore les caractéristiques optiques, une solution consiste à utiliser une couche diélectrique à haut indice de réfraction de chaque côté de la couche fonctionnelle métallique.

Toutefois, ces matériaux à haut indice ne peuvent pas être déposés à des vitesses aussi élevées que les matériaux d'indice plus faible, ce qui pose d'une part des problèmes de procédé de fabrication lorsque le dépôt est opéré de manière continu, d'autre part des problèmes d'augmentation du coût de production s'il faut baisser le rendement de la machine de dépôt de couches minces (en termes de nombre de substrats revêtus qui sont produits par unité de temps de fonctionnement).

Par ailleurs, les cibles utilisées pour déposer ces matériaux par pulvérisation réactive par exemple par procédé dit « magnétron », notamment par pulvérisation réactive, sont en général plus onéreuses que les cibles permettant de déposer les matériaux d'indice plus faible.

Il existe ainsi un besoin de minimiser la quantité de matériaux à haut indice de réfraction lorsqu'un matériau de ce type est présent de chaque côté de la couche fonctionnelle métallique.

Cette solution doit en outre permettre d'obtenir une coloration acceptable, notamment en réflexion, en particulier qui ne soit pas dans le rouge.

L'art antérieur connaît par ailleurs du brevet américain N° US 5,837,361 un substrat muni d'un empilement de couche mince comportant une seule couche fonctionnelle métallique et correspondant au préambule de la revendication 1.

L'art antérieur connaît en outre de la demande de brevet américain N° US 2006/0246301 un substrat muni d'un empilement de couche mince comportant plusieurs couches fonctionnelles métalliques ainsi qu'une ou plusieurs couches haut indice.

Le but de l'invention est de parvenir à remédier aux inconvénients de l'art antérieur, en mettant au point un nouveau type d'empilement de couches monocouche fonctionnelle, empilement qui présente une faible résistance par carré (et donc une faible émissivité), une transmission lumineuse élevée et une couleur relativement neutre, en particulier en réflexion côté couches (mais aussi côté opposé : « côté substrat »), et que ces propriétés soient de préférence conservées dans une plage restreinte que l'empilement subisse ou non, un (ou des) traitement(s) thermique(s) à haute température du type bombage et/ou trempe et/ou recuit.

Un autre but important est de proposer un empilement monocouche fonctionnelle qui présente une émissivité faible tout en présentant une faible réflexion lumineuse dans le visible, ainsi qu'une coloration acceptable, notamment en réflexion, en particulier qui ne soit pas dans le rouge.

L'invention a ainsi pour objet, dans son acception la plus large, un substrat verrier selon la revendication 1. Ce substrat est muni sur une face principale d'un empilement de couches minces comportant une couche fonctionnelle métallique à propriétés de réflexion dans l'infrarouge et/ou dans le rayonnement solaire, notamment à base d'argent ou d'alliage métallique contenant de l'argent, et deux revêtements antireflet, lesdits revêtements comportant chacun au moins deux couches diélectriques, ladite couche fonctionnelle étant disposée entre les deux revêtements antireflet, d'une part la couche fonctionnelle étant éventuellement déposée directement sur un revêtement de sous-blocage disposé entre le revêtement antireflet sous-jacent et la couche fonctionnelle et d'autre part la couche fonctionnelle étant éventuellement déposée directement sous un revêtement de sur-blocage disposé entre la couche fonctionnelle et le revêtement antireflet sus-jacent. Selon l'invention :
- chaque revêtement antireflet comporte au moins une couche diélectrique à haut indice de réfraction qui est située au contact ou a proximité de la couche fonctionnelle
- l'épaisseur optique totale de la couche diélectrique à haut indice de réfraction ou de toutes les couches diélectriques à haut indice de réfraction qui est ou qui sont située(s) dans le revêtement antireflet sous-jacent représente entre 30 et 75 % de l'épaisseur optique totale de ce revêtement antireflet sous-jacent et
- l'épaisseur optique totale de la couche diélectrique à haut indice de réfraction ou de toutes les couches diélectriques à haut indice de réfraction qui est ou qui sont située(s) dans le revêtement antireflet sus-jacent représente entre 10 et 60 % de l'épaisseur optique totale de ce revêtement antireflet sus-jacent.

Par « revêtement » au sens de la présente invention, il faut comprendre qu'il peut y avoir une seule couche ou plusieurs couches de matériaux différents à l'intérieur du revêtement.

Par « couche diélectrique à haut indice de réfraction » on entend au sens de l'invention une couche dont le matériau constitutif présente un indice de réfraction mesuré à la longueur d'onde de 550 nm qui est égal ou supérieur 2,2, voire qui est égal ou supérieur à 2,3. Cet indice, mesuré à cette longueur d'onde, est en général bien connu de la littérature pour les matériaux usuels dans le domaine des empilements de couches minces.

Par « au contact » on entend au sens de l'invention qu'aucune couche n'est interposée entre la couche à haut indice de réfaction et la couche fonctionnelle métallique. Il n'y a donc pas dans ce cas de revêtement de blocage.

Par « à proximité » on entend au sens de l'invention qu'au moins une couche est interposée entre la couche à haut indice de réfaction et la couche fonctionnelle métallique sans que l'épaisseur physique de la (ou de toutes les) couche(s) interposée(s) entre la couche à haut indice de réfaction et la couche fonctionnelle métallique n'excède 10 nm.

Par « épaisseur optique » on entend au sens de l'invention, comme habituellement, le produit de l'épaisseur physique (ou réelle) de la couche avec son indice de réfraction mesuré comme d'habitude à 550 nm.

Par « épaisseur optique totale » on entend au sens de l'invention la somme de toutes les épaisseurs optiques des couches considérées, chaque épaisseur optique étant, comme expliqué ci-avant, le produit de l'épaisseur physique (ou réelle) de la couche avec son indice de réfraction mesuré comme d'habitude à 550 nm.

Ainsi, l'épaisseur optique totale du revêtement antireflet sous-jacent est constituée de la somme de toutes les épaisseurs optiques des couches diélectriques de ce revêtement qui sont disposées entre le substrat et la couche métallique fonctionnelle ou entre le substrat et le revêtement de sous-blocage s'il est présent.

De même, l'épaisseur optique totale du revêtement antireflet sus-jacent est constituée de la somme de toutes épaisseurs optiques des couches diélectriques de ce revêtement qui sont disposées au-dessus de la couche métallique fonctionnelle, à l'opposé du substrat, ou au-dessus du revêtement de sur-blocage s'il est présent.

De fait, selon l'invention, à l'intérieur du revêtement antireflet sous-jacent ou sus-jacent, l'épaisseur optique de la couche diélectrique à haut indice de réfraction si elle est l'unique couche diélectrique à haut indice de réfraction ou la somme des épaisseurs optiques de toutes les couches diélectriques à haut indice de réfraction si plusieurs couches diélectriques à haut indice de réfraction sont présentes :
- pour le revêtement antireflet sous-jacent : est comprise entre 30 et 75 %, en incluant ces valeurs, voire entre 35 et 55 % en incluant ces valeurs, de l'épaisseur optique totale de ce revêtement antireflet sous-jacent, et
- pour le revêtement antireflet sus-jacent : est comprise entre 10 et 60 %, en incluant ces valeurs, voire entre 15 et 35 % en incluant ces valeurs, de l'épaisseur optique totale de ce revêtement antireflet sus-jacent.

Il est donc essentiel selon l'invention que la matière à haut indice de réfraction soit disposé au contact ou à proximité de la couche fonctionnelle métallique, de chaque côté de cette couche et que cette matière à haut indice de réfraction soit en quantité suffisante (d'où la valeur de début de plage de pourcentage), sans pour autant être en quantité trop importante (d'où la valeur de fin de plage de pourcentage).

Il se trouve toutefois qu'un certain déséquilibre a été observé d'une part entre les épaisseurs minimum de matière à haut indice de réfraction dans le revêtement antireflet sus-jacent et dans le revêtement antireflet sous-jacent (respectivement 10 % et 30 %, voire respectivement 15 % et 35 %) et d'autre part entre les épaisseurs maximum de matière à haut indice de réfraction dans le revêtement antireflet sus-jacent et dans le revêtement antireflet sous-jacent (respectivement 60 % et 75 %, voire respectivement 35 % et 55 %).

Du fait de cette répartition selon l'invention de la matière à haut indice de réfraction, il est alors possible de limiter l'épaisseur de couches à haut indice de réfraction. Ces couches peuvent présenter une épaisseur physique d'au moins 5 nm, voire d'au moins 8 nm dans le revêtement sous-jacent, et peuvent présenter une épaisseur physique d'au plus 25 nm, voire d'au plus 20 nm, voire d'au plus 16 nm, voire d'au plus 14 nm, toutes ces valeurs minimum pouvant êtes combinées à ces valeurs maximum.

En particulier, d'une part l'épaisseur optique totale de la couche diélectrique à haut indice de réfraction ou de toutes les couches diélectriques à haut indice de réfraction qui est ou qui sont située(s) dans le revêtement antireflet sous-jacent peut ainsi être comprise entre 15 et 65 nm, en incluant ces valeurs, voire comprise entre 18 et 50 nm, en incluant ces valeurs et d'autre part l'épaisseur optique totale de la couche diélectrique à haut indice de réfraction ou de toutes les couches diélectriques à haut indice de réfraction qui est ou qui sont située(s) dans le revêtement antireflet sus-jacent peut ainsi être comprise entre 8 et 60 nm, en incluant ces valeurs, voire comprise entre 12 et 35 nm en incluant ces valeurs, ces plages pour les revêtements antireflet sous-jacent pouvant être combinées avec ces plages pour les revêtement antireflet sus-jacent.

Il se trouve par ailleurs que d'une manière surprenante la matière à haut indice de réfraction des couches diélectriques à haut indice de réfraction est, de préférence, majoritairement dans le revêtement diélectrique sous-jacent à la couche fonctionnelle métallique de telle sorte que le rapport de l'épaisseur optique totale de la couche diélectrique à haut indice de réfraction ou de toutes les couches diélectriques à haut indice de réfraction qui est ou qui sont située(s) dans le revêtement antireflet sous-jacent sur l'épaisseur optique totale de la couche diélectrique à haut indice de réfraction ou de toutes les couches diélectriques à haut indice de réfraction qui est ou qui sont située(s) dans le revêtement antireflet sus-jacent est compris entre 1,1 et 5 en incluant ces valeurs, voire entre 1,2 et 4 en incluant ces valeurs, voire encore entre 1,3 et 3,8 en incluant ces valeurs. Ce rapport défini ensuite comme R peut en particulier être égal à 1,4 ou 1,5.

La matière constitutive de chaque couche diélectrique à haut indice de réfraction est, de préférence, choisi parmi : l'oxyde de titane, l'oxyde de niobium, le nitrure de silicium dopé au zirconium et éventuellement dopé en outre à Al.

L'oxyde de titane, TiO₂, en couches minces déposé par pulvérisation réactive magnétron à froid présente un indice compris entre 2,35 et 2,5 à 550 nm selon la cristallinité de la couche (qui dépend des conditions de dépôt comme par exemple dépôt à froid ou à chaud), - voir pour des exemples d'indices le document intitulé « Spectroellipsometric characterization of materials for multilayer coatings » parue dans la revue Applied Surface Science, 175-176 (2001) pages 276-280.

L'oxyde de niobium, Nb₂O₅, en couches minces peut présenter un indice de réfraction entre 2,25 et 2,40 à 550 nm selon le document intitulé « Characterization of sputtered and annealed niobium oxide films using spectroscopic ellipsometry, Rutherford backscattering spectrometry and X-ray diffraction » parue dans la revue Thin Solid Film, 516 (2008) pages 8096-8100.

Il est aussi possible de se référer à la demande de brevet N° EP 1 656 328 A2 qui expose la réalisation d'une couche en Si₃N₄:Zr pour un revêtement anti-reflet et donne en page 12 l'indice de Si₃N₄:Zr selon le taux Zr (et des indices de TiO₂, Nb₂O₅ en page 3).

Les couches à haut indice selon l'invention peuvent ne pas être strictement stoechiométriques et être sous ou sur-stoechiométriques en oxygène pour les oxydes et/ou sous ou sur-stoechiométriques en azote pour les nitrures.

En outre, pour obtenir un compromis acceptable entre une transmission lumineuse élevée, des couleurs neutres en réflexion et une sélectivité (rapport de la transmission lumineuse T_{L} dans le visible du vitrage sur le facteur solaire FS du vitrage et est telle que : S = T_{Lvis} / FS) relativement élevée, le rapport E de l'épaisseur optique en nm du revêtement antireflet sous-jacent sur l'épaisseur optique en nm du revêtement antireflet sus-jacent est, de préférence, tel que : 0,4 ≤ E ≤ 0,9, voire 0,5 ≤ E ≤ 0,8.Dans une variante particulière, lesdits revêtements antireflet sous-jacent et antireflet sus-jacent comportent chacun au moins une couche diélectrique à base de nitrure de silicium, éventuellement dopé à l'aide d'au moins un autre élément, comme l'aluminium.

Dans une variante particulière, la dernière couche du revêtement antireflet sous-jacent, celle la plus éloignée du substrat, est une couche de mouillage à base d'oxyde, notamment à base d'oxyde de zinc, éventuellement dopé à l'aide d'au moins un autre élément, comme l'aluminium.

Dans une variante toute particulière, le revêtement antireflet sous-jacent comprend au moins une couche diélectrique à base de nitrure, notamment de nitrure de silicium et/ou de nitrure d'aluminium et au moins une couche de lissage non cristallisée en un oxyde mixte, ladite couche de lissage étant en contact avec une couche de mouillage sus-jacente cristallisée.

De préférence, le revêtement de sous-blocage et/ou le revêtement de sur-blocage comprend une couche fine à base de nickel ou de titane présentant une épaisseur physique e telle que 0,2 nm ≤ e ≤ 1,8 nm.

Dans une version particulière, au moins une couche fine à base de nickel, et notamment celle du revêtement de sur-blocage, comprend du chrome, de préférence dans des quantités massiques de 80 % de Ni et 20 % de Cr.

Dans une autre version particulière, au moins une couche fine à base de nickel, et notamment celle du revêtement de sur-blocage, comprend du titane, de préférence dans des quantités massique de 50 % de Ni et 50 % de Ti.

Par ailleurs, le revêtement de sous-blocage et/ou le revêtement de sur-blocage peut comprendre au moins une couche fine à base de nickel présent sous forme métallique si le substrat muni de l'empilement de couches minces n'a pas subi de traitement thermique de bombage et/ou trempe après le dépôt de l'empilement, cette couche étant au moins partiellement oxydée si le substrat muni de l'empilement de couches minces a subi au moins un traitement thermique de bombage et/ou trempe après le dépôt de l'empilement.

La couche fine à base de nickel du revêtement de sous-blocage et/ou la couche fine à base de nickel du revêtement de sur-blocage lorsqu'elle est présente est, de préférence, directement au contact de la couche fonctionnelle.

La dernière couche du revêtement antireflet sus-jacent, celle la plus éloignée du substrat, est, de préférence, à base d'oxyde, déposée de préférence sous stoechiométrique, et notamment est à base d'oxyde de titane (TiOₓ) ou à base d'oxyde mixte de zinc et d'étain (SnZnOₓ), éventuellement dopé par un autre élément à raison de 10 % en masse au maximum.

L'empilement peut ainsi comporter une dernière couche (« overcoat » en anglais), c'est-à-dire une couche de protection,

Cette couche de protection présente, de préférence, une épaisseur physique comprise entre 0,5 et 10 nm.

Le vitrage selon l'invention incorpore au moins le substrat porteur de l'empilement selon l'invention, éventuellement associé à au moins un autre substrat. Chaque substrat peut être clair ou coloré. Un des substrats au moins notamment peut être en verre coloré dans la masse. Le choix du type de coloration va dépendre du niveau de transmission lumineuse et/ou de l'aspect colorimétrique recherchés pour le vitrage une fois sa fabrication achevée.

Le vitrage selon l'invention peut présenter une structure feuilletée, associant notamment au moins deux substrats rigides du type verre par au moins une feuille de polymère thermoplastique, afin de présenter une structure de type verre/empilement de couches minces/feuille(s)/verre. Le polymère peut notamment être à base de polyvinylbutyral PVB, éthylène vinylacétate EVA, polyéthylène téréphtalate PET, polychlorure de vinyle PVC.

Le vitrage peut par ailleurs présenter une structure de type verre/empilement de couches minces/feuille(s) de polymère.

Les vitrages selon l'invention sont aptes à subir un traitement thermique sans dommage pour l'empilement de couches minces. Ils sont donc éventuellement bombés et/ou trempés.

Le vitrage peut être bombé et/ou trempé en étant constitué d'un seul substrat, celui muni de l'empilement. Il s'agit alors d'un vitrage dit « monolithique ». Dans le cas où ils sont bombés, notamment en vue de constituer des vitrages pour véhicules, l'empilement de couches minces se trouve de préférence sur une face au moins partiellement non plane.

Le vitrage peut aussi être un vitrage multiple, notamment un double-vitrage, au moins le substrat porteur de l'empilement pouvant être bombé et/ou trempé. Il est préférable dans une configuration de vitrage multiple que l'empilement soit disposé de manière à être tourné du côté de la lame de gaz intercalaire. Dans une structure feuilletée, l'empilement peut être en contact avec la feuille de polymère.

Le vitrage peut aussi être un triple vitrage constitué de trois feuilles de verre séparées deux par deux par une lame de gaz. Dans une structure en triple vitrage, le substrat porteur de l'empilement peut être en face 2 et/ou en face 5, lorsque l'on considère que le sens incident de la lumière solaire traverse les faces dans l'ordre croissant de leur numéro.

Lorsque le vitrage est monolithique ou multiple du type double-vitrage, triple vitrage ou vitrage feuilleté, au moins le substrat porteur de l'empilement peut être en verre bombé ou trempé, ce substrat pouvant être bombé ou trempé avant ou après le dépôt de l'empilement.

Lorsque ce vitrage est monté en double-vitrage il présente, de préférence une sélectivité S ≥ 1,3 voire S ≥ 1,4, ou S ≥ 1,5 voire S > 1,5.

L'invention concerne en outre l'utilisation du substrat selon l'invention, pour réaliser un double vitrage qui présente une sélectivité S ≥ 1,3, voire S > 1,4, ou S ≥ 1,5 voire S > 1,5.

Le substrat selon l'invention peut être en particulier utilisé pour réaliser une électrode transparente d'un vitrage chauffant ou d'un vitrage électrochrome ou d'un dispositif d'éclairage ou d'un dispositif de visualisation ou d'une cellule photovoltaïque.

Avantageusement, la présente invention permet ainsi de réaliser un empilement de couches minces monocouche fonctionnelle présentant dans une configuration vitrage multiple, et notamment double vitrage, une sélectivité importante (S ≥ 1,35), une faible émissivité (ε_{N} ≤ 3 %) et une esthétique favorable (T_{Lvis} ≥ 70 %, R_{Lvis} ≤ 25 %, couleurs neutres en réflexion).

L'empilement monocouche fonctionnelle selon l'invention coûte moins cher à produire qu'un empilement bicouches fonctionnelles présentant des caractéristiques similaires.

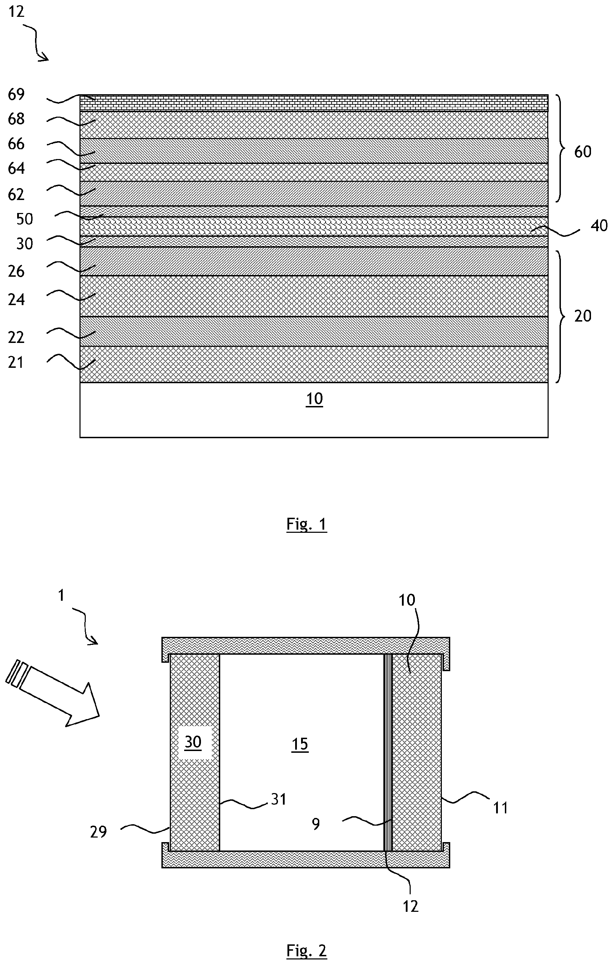

Les détails et caractéristiques avantageuses de l'invention ressortent des exemples non limitatifs suivants, illustrés à l'aide de la figure 1 ci-jointe qui illustre un empilement 12 monocouche fonctionnelle selon l'invention déposé sur un substrat 10, la couche fonctionnelle étant pourvue d'un revêtement de sous-blocage et d'un revêtement de sur-blocage et l'empilement étant en outre pourvu d'un revêtement de protection optionnel et à l'aide de la figure 2 qui illustre la réalisation d'un vitrage 1 double (DGU) constitué de deux feuilles de verre, réalisant chacune un substrat 10, 30, et séparées par une lame de gaz intermédiaire 15.

Une des feuilles de verre, la feuille la plus à l'intérieur du bâtiment lorsque l'on considère le sens incident de la lumière solaire entrant dans le bâtiment illustré par la double flèche orientée sur la figure de la gauche vers la droite, constitue le substrat 10 qui est revêtu sur sa face intérieure 9 tournée vers la lame de gaz intermédiaire d'un revêtement isolant constitué d'un empilement 12 monocouche fonctionnelle décrit ci-après (l'empilement monocouche fonctionnelle est ainsi en face intérieure dite « face 3 » du double vitrage) ; la face extérieure 11 du substrat 10 n'est revêtue d'aucun empilement de couches minces.

L'autre feuille de verre, le substrat 30, n'est pas revêtue sur sa face intérieure 31 tournée vers la lame de gaz intermédiaire d'un revêtement isolant : la feuille la plus à l'extérieur du bâtiment lorsque l'on considère le sens incident de la lumière solaire ; sa face extérieure 29 (dite « face 1 ») peut par exemple être revêtue d'un revêtement autonettoyant.

Dans ces figures, les proportions entre les épaisseurs des différentes couches ne sont pas rigoureusement respectées afin de faciliter leur lecture.

Par ailleurs, dans tous les exemples ci-après l'empilement 12 de couches minces est déposé sur un substrat 10 en verre sodo-calcique clair d'une épaisseur de 4 mm (PLANILUX de SAINT-GOBAIN).

En outre, pour ces exemples, dans tous les cas où un traitement thermique a été appliqué au substrat, il s'agissait d'un recuit pendant environ 8 minutes à une température d'environ 620°C suivi d'un refroidissement à l'air ambiant (environ 20°C), afin de simuler un traitement thermique de bombage ou de trempe.

Pour tous les exemples ci-après, pour le montage en double vitrage, l'empilement de couches minces a été positionné en face 3, c'est-à-dire sur la feuille la plus à l'extérieur du bâtiment lorsque l'on considère le sens incident de la lumière solaire entrant dans le bâtiment ; sur sa face tournée vers la lame de gaz, comme illustré en figure 2, présentant la configuration : 4-16 (Ar 90%)-4, c'est-à-dire constitué de deux feuilles de verre transparent de 4 mm, réalisant chacune un substrat 10, 30, séparées par une lame de gaz intermédiaire 15 à 90 % d'argon et 10 % d'air d'une épaisseur de 16 mm, le tout étant maintenu ensemble par une structure de châssis.

La figure 1 illustre une structure d'empilement monocouche fonctionnelle déposé sur le substrat 10 verrier, transparent, dans laquelle la couche fonctionnelle 40 unique est disposée entre deux revêtements antireflet, le revêtement antireflet sous-jacent 20 situé en dessous de la couche fonctionnelle 40 en direction du substrat 10 et le revêtement antireflet sus-jacent 60 disposé au-dessus de la couche fonctionnelle 40 à l'opposé du substrat 10.

Ces deux revêtements antireflet 20, 60, comportent chacun au moins une couche diélectrique 21, 22, 24, 26 ; 62, 64, 66, 68, 69.

Eventuellement, d'une part la couche fonctionnelle 40 peut être déposée sur un revêtement de sous-blocage 30 disposé entre le revêtement antireflet sous-jacent 20 et la couche fonctionnelle 40 et d'autre part la couche fonctionnelle 40 peut être déposée directement sous un revêtement de sur-blocage 50 disposé entre la couche fonctionnelle 40 et le revêtement antireflet sus-jacent 60.

Sur la figure 1 on constate que le revêtement antireflet 20 inférieur comporte quatre couches antireflet 21, 22, 24 et 26 , que le revêtement antireflet 60 supérieur comporte quatre couches antireflet 62, 64, 66, 68 et que ce revêtement antireflet 60 se termine par une couche de protection optionnelle 69, en particulier à base d'oxyde, notamment sous stoechiométrique en oxygène.

Selon l'invention chaque revêtement antireflet 20, 60 comporte au moins une couche diélectrique à haut indice de réfraction 24, 64 située au contact ou a proximité de la couche fonctionnelle 40 et d'une part l'épaisseur optique totale e₂ de la couche diélectrique à haut indice de réfraction 24 ou de toutes les couches diélectriques à haut indice de réfraction qui est ou qui sont située(s) dans le revêtement antireflet sous-jacent 20 représente entre 30 et 75 % de l'épaisseur optique totale e₂₀ de ce revêtement antireflet sous-jacent 20 et d'autre part l'épaisseur optique totale e₆ de la couche diélectrique à haut indice de réfraction 64 ou de toutes les couches diélectriques à haut indice de réfraction qui est ou qui sont située(s) dans le revêtement antireflet sus-jacent 60 représente entre 10 et 60 % de l'épaisseur optique totale e₆₀ de ce revêtement antireflet sus-jacent 60.

Par ailleurs, de préférence, chaque revêtement antireflet 20, 60 comporte au moins une couche diélectrique à haut indice de réfraction 24, 64 située au contact ou a proximité de la couche fonctionnelle 40 et d'une part l'épaisseur optique totale e₂ de la couche diélectrique à haut indice de réfraction 24 ou de toutes les couches diélectriques à haut indice de réfraction qui est ou qui sont située(s) dans le revêtement antireflet sous-jacent 20 représente entre 35 et 55 % de l'épaisseur optique totale e₂₀ de ce revêtement antireflet sous-jacent 20 et d'autre part l'épaisseur optique totale e₆ de la couche diélectrique à haut indice de réfraction 64 ou de toutes les couches diélectriques à haut indice de réfraction qui est ou qui sont située(s) dans le revêtement antireflet sus-jacent 60 représente entre 15 et 55 % de l'épaisseur optique totale e₆₀ de ce revêtement antireflet sus-jacent 60.

En outre, de préférence, le rapport E de l'épaisseur optique e₂₀ en nm du revêtement antireflet sous-jacent 20 sur l'épaisseur optique e₆₀ en nm du revêtement antireflet sus-jacent 60 est tel que :
0,4 ≤ E ≤ 0,9, voire 0,5 ≤ E ≤ 0,8

Une simulation numérique a dans un premier temps été réalisée (exemples 1 à 3 selon l'invention et contre-exemples 9 à 13 qui ne sont pas selon l'invention, ci-après), puis deux empilements de couches minces ont effectivement été déposés : l'exemple 1 et le contre-exemple 11.

Le tableau 1 ci-après expose les épaisseurs physiques en nanomètres de chacune des couches ou des revêtements des exemples 1 à 3 et des contre-exemples 9 à 13, le tableau 2 synthétise les principales données relatives à ces exemples, notamment en matière d'épaisseur optiques et le tableau 3 expose les principales caractéristiques optiques des ces exemples obtenues par simulations.

Dans le tableau 1, la colonne « N° » indique le numéro de la couche en lien avec la configuration de la figure 1 et la seconde colonne indique le matériau déposé.

**Tableau 1**

| Ex. | | **9** | **10** | **1** | **11** | **2** | **12** | **3** | **13** |
|---|---|---|---|---|---|---|---|---|---|
| N° | | | | | | | | | |
| 69 | ZnSnOₓ | 2 | 2 | 2 | 2 | 2 | 2 | 2 | 2 |
| 68 | **TiO₂** | **0** | **0** | **0** | **0** | **0** | **10** | **0** | **0** |
| 66 | Si₃N₄ | 48 | 5 | 35,5 | 27 | 31 | 35,5 | 30 | 23 |
| 64 | **TiO₂** | **0** | **29** | **10** | **10** | **10** | **0** | **8** | **8** |
| 62 | ZnO | 5 | 5 | 5 | 14 | 9 | 5 | 5 | 14 |
| 50 | NiCr | 0,2 | 0,2 | 0,2 | 0,2 | 0,2 | 0,2 | 0,2 | 0,2 |
| 40 | Ag | 15 | 15 | 15 | 15 | 15 | 15 | 10,5 | 10,5 |
| 30 | NiCr | - | - | - | - | - | - | 0,5 | 0,5 |
| 26 | ZnO | 5 | 5 | 5 | 14 | 9 | 5 | 5 | 5 |
| 24 | **TiO₂** | **0** | **21** | **14** | **14** | **14** | **14** | **12** | **0** |
| 22 | Si₃N₄ | 30 | 4 | 14 | 5 | 10 | 14 | 19 | 19 |
| 21 | **TiO₂** | - | - | - | - | - | - | - | **12** |

Dans le tableau 2, les données présentées consistent :
- e₂ et e₆ sont respectivement les épaisseurs optiques totales des couches diélectriques à haut indice de réfraction 24, 64 des revêtements antireflet sous-jacent 20 et sus-jacent 60 (voire les épaisseurs optiques totales des couches à haut indice de réfraction 22, 68, respectivement pour les contre-exemples 13 et 12),
- e₂₀ et e₆₀ sont respectivement les épaisseurs optiques totales des revêtements antireflet sous-jacent 20 et sus-jacent 60,
- % 2, est le pourcentage de l'épaisseur optique totale e₂ de la couche diélectrique à haut indice de réfraction 24 unique (voire de la couche 21 unique pour le contre-exemple 13) du revêtement antireflet sous-jacent 20 par rapport à l'épaisseur optique totale e₂₀ de ce revêtement antireflet sous-jacent 20,
- % 6, est le pourcentage de l'épaisseur optique totale e₆ de la couche diélectrique à haut indice de réfraction 64 unique (voire de la couche 68 unique pour le contre-exemple 12) du revêtement antireflet sus-jacent 60 par rapport à l'épaisseur optique totale e₆₀ de ce revêtement antireflet sus-jacent 60,
- d2 et d6 sont les distances physiques entre respectivement chaque couche diélectrique à haut indice de réfraction 24, 64 et la couche fonctionnelle 40 (voire les distances physiques entre respectivement chaque couche diélectrique à haut indice de réfraction 21, 68 et la couche fonctionnelle 40, respectivement pour les contre-exemples 13 et 12).

Pour ce tableau 2, l'indice de chaque couche qui a été considéré pour le calcul des épaisseurs optiques est :
Si₃N₄ : 2,05
ZnO : 1,9
TiO₂ : 2,4
ZnSnOₓ : 2,0

**Tableau 2**

| Ex. | **9** | **10** | **1** | **11** | **2** | **12** | **3** | **13** |
|---|---|---|---|---|---|---|---|---|
| e₂ (nm) | 0 | 50 | 34 | 34 | 34 | 34 | 29 | 29 |
| e₂₀ (nm) | 71 | 68 | 72 | 70 | 71 | 72 | 77 | 77 |
| % 2 | 0 | 74 | 47 | 48 | 47 | 47 | 37 | 37 |
| e₆ (nm) | 0 | 70 | 24 | 24 | 24 | 24 | 19 | 19 |
| e₆₀ (nm) | 112 | 93 | 110 | 110 | 109 | 110 | 94 | 97 |
| % 6 | 0 | 75 | 22 | 22 | 22 | 22 | 20 | 20 |
| d2 (nm) | | 5 | 5 | 14 | 9 | 5 | 5 | 24 |
| d6 (nm) | | 5 | 5 | 14 | 9 | 35,5 | 5 | 14 |
| R = e₂ / e₆ | | 0,7 | 1,4 | 1,4 | 1,4 | 1,4 | 1,5 | 1,5 |
| E = e₂₀ / e₆₀ | 0,63 | 0,73 | 0,65 | 0,63 | 0,65 | 0,65 | 0,82 | 0,79 |

Dans le tableau 3, les caractéristiques optiques du substrat revêtu de l'empilement présentées consistent en :
- TLᵥᵢₛ, transmission lumineuse T_{L} dans le visible en %, mesurées selon l'illuminant D65 2°,
- couleurs en transmission a_{T}* et b_{T}* dans le système LAB mesurées selon l'illuminant D65 2°, côté du substrat opposé à la face principale sur laquelle est déposée l'empilement de couches minces,
- Rcᵥᵢₛ, réflexion lumineuse dans le visible en %, mesurées selon l'illuminant D65 2°, côté de la face principale du substrat sur laquelle est déposée l'empilement de couches minces,
- couleurs en réflexion a_{Rc}* et b_{Rc}* dans le système LAB mesurées selon l'illuminant D65 2°, côté du substrat opposé à la face principale sur laquelle est déposée l'empilement de couches minces,

Le tableau 3 expose par ailleurs le coefficient g, facteur solaire, en % (norme CEN), considéré dans une configuration double-vitrage 4-16 (Ar 90%)-4, avec l'empilement de couches minces en face 3 et l'autre substrat qui est un verre standard clair (PLANILUX de SAINT-GOBAIN), comme illustré en figure 2.

**Tableau 3**

| Ex. | **9** | **10** | **1** | **11** | **2** | **12** | **3** | **13** |
|---|---|---|---|---|---|---|---|---|
| TLᵥᵢₛ | 71,9 | 83,2 | 78,3 | 76,7 | 77,5 | 73,8 | 85,4 | 85,7 |
| a_{T}* | -3,3 | -4,6 | -3,2 | -3,7 | -3,4 | -2,9 | -1,8 | -2,7 |
| b_{T}* | 3,3 | 4,1 | 2,2 | 4,4 | 3,0 | 4,5 | 0,1 | 1,9 |
| Rcᵥᵢₛ | 21,0 | 9,3 | 14,5 | 16,3 | 15,3 | 19,3 | 4,2 | 4,5 |
| a_{Rc}* | 4,2 | 11,1 | 4,8 | 5,4 | 4,8 | 2,8 | 0,3 | 6,0 |
| b_{Rc}* | -10,5 | -17,7 | -9,7 | -13,8 | -11,5 | -12,7 | -11,2 | -18,9 |
| g | 45,9 | 50,1 | 49,2 | 47,9 | 48,7 | 47,1 | 60,3 | 59,7 |

Dans l'exemple 9, il n'y a aucune couche à haut indice de réfraction, ni dans le revêtement antireflet sous-jacent 20, entre le substrat et la couche fonctionnelle 40, ni dans le revêtement antireflet sus-jacent 60, au-dessus de la couche fonctionnelle 40.

L'empilement de cet exemple 9 est utile, parce qu'il présente une couleur acceptable, tant en transmission (a_{T}* négatif, b_{T}* positif et tous les deux de valeur absolue relativement faible) qu'en réflexion côté empilement (a_{Rc}* positif, b_{Rc}* négatif et tous les deux de valeur absolue relativement faible) et parce qu'il est du type « trempable » ou « à tremper » car ses propriétés optiques sont conservées lors d'un traitement thermique, mais il ne présente pas une transmission lumineuse très d'un traitement thermique, mais il ne présente pas une transmission lumineuse très élevée car la couche fonctionnelle n'est pas correctement antireflètée. En conséquence, la réflexion lumineuse est également relativement élevée.

Dans l'exemple 10, deux couches diélectriques à haut indice de réfraction 24, 64 sont introduites dans l'empilement respectivement dans le revêtement antireflet sous-jacent 20 et le revêtement antireflet sus-jacent 60.

Toutefois, ces deux couches sont relativement épaisses, en particulier celles du revêtement antireflet sous-jacent, ce qui coûte cher à déposer et complique le procédé de dépôt.

La transmission lumineuse est fortement augmentée par rapport à l'exemple 9, et par conséquent la réflexion lumineuse est très fortement baissée et le facteur solaire augmenté. Toutefois, la couleur ne donne pas entièrement satisfaction, en particulier en réflexion côté empilement : a_{Rc}* et b_{Rc}* sont tous les deux, en valeur absolue, trop élevés, ce qui se traduit par une couleur dans les tons rouges-violets.

On constate, pour cet exemple 10 que la proportion d'épaisseur optique de couche à haut indice 24 par rapport à l'épaisseur optique totale du revêtement antireflet sous-jacent 20 est élevée (74 %), alors que pourtant la majorité de la matière à haut indice (total des couches 24 et 64) est située dans le revêtement antireflet sus-jacent 60 (rapport R inférieur à 1, ici de 0,7).

Dans l'exemple 1 selon l'invention, comme dans l'exemple 10, deux couches diélectriques à haut indice de réfraction 24, 64 sont introduites dans l'empilement respectivement dans le revêtement antireflet sous-jacent 20 et le revêtement antireflet sus-jacent 60.

Ces deux couches 24, 64 sont conservées, comme dans l'exemple 10, à proximité de la couche fonctionnelle 40 puisque dans les deux cas, une seule couche (respectivement 26, 62) d'épaisseur physique de 5 nm est insérée entre d'une part la couche à haut indice de réfraction 24 et la couche fonctionnelle 40 et d'autre part la couche fonctionnelle 40 et la couche à haut indice de réfraction 64.

Toutefois, ces deux couches sont moins épaisses dans le cas de l'exemple 1 que dans le cas de l'exemple 10, ce qui coûte moins cher à déposer et simplifie le procédé de dépôt : la proportion d'épaisseur optique de couche à haut indice de réfraction 24, 64 représente respectivement moins de la moitié de l'épaisseur optique totale du revêtement antireflet sous-jacent 20 et du revêtement antireflet sus-jacent 60 (respectivement 47 % et 22 %).

Par ailleurs, la majorité de la matière à haut indice de réfraction n'est plus dans le revêtement antireflet sus-jacent 60 comme dans l'exemple 10, mais dans le revêtement antireflet sous-jacent 20 puisque le rapport R est supérieur à 1 (il est de 1,4).

Pour cet exemple 1, la transmission lumineuse est certes légèrement moins élevée que celle de l'exemple 10, mais reste tout à fait acceptable et bien supérieure à celle de l'exemple 9 ; la réflexion lumineuse est certes légèrement plus élevée que celle de l'exemple 10, mais reste tout à fait acceptable et bien inférieure à celle de l'exemple 9 ; et d'une manière surprenante, le facteur solaire est conservé à une valeur quasi identique à celle de l'exemple 10.

En outre et surtout, la couleur en transmission est meilleure que dans l'exemple 10 (a_{T}* et surtout b_{T}* plus faibles en valeurs absolues) et la couleur en réflexion est également nettement meilleure (a_{Rc}* et b_{Rc}* plus faibles en valeurs absolues).

Dans l'exemple 11, la composition de l'empilement est identique à celle de l'exemple 1 sauf en ce que les couches intermédiaires 26 et 62 sont épaissies, ce qui a pour effet d'augmenter les distances d2 et d6 (à 14 nm), respectivement entre d'une part la couche diélectrique à haut indice de réfraction 24 et la couche fonctionnelle 40 et d'autre part la couche fonctionnelle 40 et la couche diélectrique à haut indice de réfraction 64.

Ceci engendre une baisse de la transmission lumineuse et une augmentation de la réflexion lumineuse, ainsi qu'une baisse du facteur solaire et engendre par ailleurs une couleur en réflexion côté empilement non-acceptable (a_{Rc}* > 5) et une couleur en transmission moins favorable (b_{T}* >4).

L'exemple 2 selon l'invention illustre la limite de l'obtention de l'effet technique selon l'invention : cet exemple 2 est identique à l'exemple 1 sauf en ce que les couches intermédiaires 26 et 62 sont épaissies, ce qui a pour effet d'augmenter les distances d2 et d6 (à 9 nm), mais ces couches intermédiaires 26 et 62 sont moins épaissies que dans l'exemple 11.

Dans l'exemple 12, la composition de l'empilement est identique à celle de l'exemple 1 sauf en ce que la couche intermédiaire 62 est épaissie, ce qui a pour effet d'augmenter la distance d6 (à 35,5 nm).

Ceci engendre une forte baisse de la transmission lumineuse et une forte augmentation de la réflexion lumineuse, ainsi qu'une baisse du facteur solaire.

L'exemple 3 selon l'invention illustre l'obtention de l'effet technique avec une autre structure d'empilement : une structure à revêtement de sous-blocage 30 et à revêtement de sur-blocage 50.

Les deux couches à haut indice de réfraction 24, 64 sont conservées, comme dans l'exemple 1, à proximité de la couche fonctionnelle 40 puisque dans les deux cas, une seule couche (respectivement 26, 62) d'épaisseur physique de 5 nm est insérée entre d'une part la couche à haut indice de réfraction 24 et la couche fonctionnelle 40 et d'autre part la couche fonctionnelle 40 et la couche à haut indice de réfraction 64, si on néglige l'épaisseur des revêtements de blocage 30, 50.

Ces deux couches à haut indice de réfraction 24, 64 sont déposées à des épaisseurs optiques similaires à celles de l'exemple 1 et comme pour l'exemple 1, la proportion d'épaisseur optique de couche à haut indice de réfraction 24, 64 représente respectivement moins de la moitié de l'épaisseur optique totale du revêtement antireflet sous-jacent 20 et du revêtement antireflet sus-jacent 60 (respectivement 37 % et 20 %).

Par ailleurs, comme pour l'exemple 1, la majorité de la matière à haut indice de réfraction est dans le revêtement antireflet sous-jacent 20 puisque le rapport R est supérieur à 1 (il est même de 1,5).

Avec une telle structure d'empilement, la transmission lumineuse est bien supérieure à celle de l'exemple 1, la réflexion lumineuse est bien inférieure à celle de l'exemple 1 et le facteur solaire est fortement augmenté, principalement du fait que la couche d'argent est plus mince, d'où une émissivité qui sera aussi augmentée.

La couleur, tant en transmission qu'en réflexion côté empilement est tout à fait acceptable.

Pour parfaire la compréhension de l'invention, un exemple 13 basé sur l'exemple 3 est proposé.

Cette fois, les deux distances d2 et d6 sont très fortement augmentées puisque la couche à haut indice du revêtement antireflet sous-jacent 20 (couche qui est numérotée 21) est déposée directement sur le substrat et qu'au total une épaisseur physique de 24 nm de matière est interposée entre cette couche et la couche fonctionnelle 40 (en négligeant l'épaisseur du revêtement de sous-blocage 30) et la couche à haut indice 64 du revêtement antireflet sus-jacent 60 est déposée directement sur une couche intermédiaire d'une épaisseur physique de 14 nm (en négligeant l'épaisseur du revêtement de sur-blocage 50).

Ces deux couches à haut indice de réfraction 21, 64 sont déposées à des épaisseurs optiques similaires à celles de l'exemple 3 et comme pour l'exemple 3, la proportion d'épaisseur optique de couche à haut indice de réfraction 21, 64 représente respectivement moins de la moitié de l'épaisseur optique totale du revêtement antireflet sous-jacent 20 et du revêtement antireflet sus-jacent 60 (respectivement 37 % et 20 %).

Le tableau 3 montre que bien que la transmission lumineuse et la réflexion lumineuse sont conservées par rapport à l'exemple 3, mais que la couleur en réflexion de cet exemple 13 n'est pas acceptable en raison de a_{Rc}* et b_{Rc}* trop élevés en valeurs absolues.

L'exemple 1 et le contre-exemple 11 ont effectivement fait l'objet d'une validation en déposant sur un substrat les empilements correspondant tels que présentés dans le tableau 1.

Pour ces exemples, les conditions de dépôt des couches sont :

**Tableau 4**

| Couche | Cible employée | Pression de dépôt | Gaz |
|---|---|---|---|
| Si₃N₄ | Si:Al à 92:8 % wt | 1,5.10⁻³ mbar | Ar /(Ar + N₂) à 45 % |
| TiO₂ | TiOₓ avec x de l'ordre de 1,9 | 1,5.10⁻³ mbar | Ar / (Ar + O₂) à 95 % |
| SnZnOₓ | SnZn:Sb à 34:65:1 wt | 2.10⁻³ mbar | Ar /(Ar + O₂) à 58 % |
| ZnO | Zn:Al à 98:2 % wt | 2.10⁻³ mbar | Ar /(Ar + O₂) à 52 % |
| NiCr | NiCr à 80:20 % wt | 2.10⁻³ mbar | Ar à 100 % |
| Ag | Ag | 2.10⁻³ mbar | Ar à 100 % |

Les caractéristiques de résistivité, optiques et énergétiques de ces exemples sont reportées dans le tableau 5 ci-après :
Pour ces exemples, les caractéristiques du substrat revêtu de l'empilement sont :
- R qui indique : la résistance par carré de l'empilement, en ohms par carré ;
- T_{L} qui indique : la transmission lumineuse dans le visible en % du substrat revêtu de l'empilement, mesurée selon l'illuminant D65 à 2° ;
- a_{T}* et b_{T}* qui indiquent : les couleurs en transmission a* et b* dans le système LAB mesurées selon l'illuminant D65 à 2° ;
- R_{c} qui indique : la réflexion lumineuse dans le visible en %, mesurée selon l'illuminant D65 à 2°, côté du substrat revêtu de l'empilement de couches minces ;
- a_{c}* et b_{c}* qui indiquent : les couleurs en réflexion a* et b* dans le système LAB mesurées selon l'illuminant D65 à 2°, côté du substrat revêtu ;
- R_{g} qui indique : la réflexion lumineuse dans le visible en %, mesurée selon l'illuminant D65 à 2°, côté du substrat nu ;
- a_{g}* et b_{g}* qui indiquent : les couleurs en réflexion a* et b* dans le système LAB mesurées selon l'illuminant D65 à 2°, côté du substrat nu.

Comme précédemment, le coefficient g, facteur solaire, en % (norme CEN), est considéré dans une configuration double-vitrage 4-16 (Ar 90%)-4, avec l'empilement de couches minces en face 3 et l'autre substrat qui est un verre standard clair (PLANILUX de SAINT-GOBAIN), comme illustré en figure 2.

**Tableau 5**

| Ex. | R | T_{L} | g | a_{T}* | b_{T}* | R_{c} | a_{c}* | b_{c}* | R_{g} | a_{g}* | b_{g}* |
|---|---|---|---|---|---|---|---|---|---|---|---|
| 1 | 2,6 | 76,9 | 50,5 | -4 | 3,3 | 13 | 4,5 | -8,9 | 15,5 | 4,3 | -7,2 |
| 11 | 2,6 | 76,1 | 49,4 | -4,7 | 5,1 | 14,2 | 5,5 | -12,5 | 16,6 | 5,4 | -10,1 |

En comparant les caractéristiques optiques et énergétiques du tableau 5 ci-dessus avec les caractéristiques optiques du tableau 3, on constate une bonne correspondance du point de vue des écarts entre les exemples 1 et 11.

Les caractéristiques optiques obtenues avec les empilements déposés ne sont pas identiques à celles des simulations qui sont dans tableau 3 car il s'agit d'empilements de test, non complètement optimisés, en particulier au regard de l'épaisseur de couche métallique fonctionnelle effectivement déposée.

L'empilement de l'exemple 1 est un empilement trempable au sens de l'invention car la variation au traitement thermique de transmission lumineuse dans le visible est inférieure 5 et même inférieure à 3.

Il est donc difficile de distinguer des substrats selon l'exemple 1 ayant subi un traitement thermique de substrats respectivement de ce même exemple n'ayant pas subi de traitement thermique, lorsqu'ils sont disposés côte à côte.

En outre, la résistance mécanique de l'empilement selon l'invention est très bonne grâce à la présence de la couche de protection 69.

Par ailleurs, la tenue chimique générale de cet empilement de l'exemple 1 est globalement bonne.

L'utilisation d'une (et a fortiori de plusieurs) couche(s) à base de Si:Zr telle que celle connue de la demande de brevet N° EP 1 656 328 A2 permet en outre d'opérer le dépôt de la ou des couches à haut indice de réfraction concernées plus vite et permet en outre d'obtenir une très bonne tempabilité, notamment du fait de la très bonne compatibilité de ce genre de couche avec les couches d'oxydes ou de nitrures environnantes.

Du fait de l'épaisseur importante de la couche d'argent (et donc de la faible résistance par carré obtenue) ainsi que des bonnes propriétés optiques (en particulier la transmission lumineuse dans le visible), il est possible, par ailleurs d'utiliser le substrat revêtu de l'empilement selon l'invention pour réaliser un substrat électrode transparent.

Ce substrat électrode transparent peut convenir pour un dispositif électroluminescent organique, en particulier en remplaçant la couche 66 en nitrure de silicium de l'exemple 1 par une couche conductrice (avec en particulier une résistivité inférieure à 1 Ω.cm) et notamment une couche à base d'oxyde. Cette couche peut être par exemple en oxyde d'étain ou à base d'oxyde de zinc éventuellement dopé Al ou Ga, ou à base d'oxyde mixte et notamment d'oxyde d'Indium et d'étain ITO, d'oxyde d'Indium et de zinc IZO, d'oxyde d'étain et de zinc SnZnO éventuellement dopé (par exemple avec Sb, F). Ce dispositif électroluminescent organique peut être utilisé pour réaliser un dispositif d'éclairage ou un dispositif de visualisation (écran).

D'une manière générale, le substrat électrode transparent peut convenir pour vitrage chauffant, pour tout vitrage électrochrome, tout écran de visualisation, ou encore pour une cellule (ou panneau) photovoltaïque et notamment pour une face arrière de cellule photovoltaïque transparente.

La présente invention est décrite dans ce qui précède à titre d'exemple. Il est entendu que l'homme du métier est à même de réaliser différentes variantes de l'invention sans pour autant sortir du cadre du brevet tel que défini par les revendications.

## Revendications

1. Substrat (10) transparent muni sur une face principale d'un empilement de couches minces comportant une seule couche fonctionnelle (40) métallique à propriétés de réflexion dans l'infrarouge et/ou dans le rayonnement solaire, notamment à base d'argent ou d'alliage métallique contenant de l'argent, et deux revêtements antireflet (20, 60), lesdits revêtements comportant chacun au moins deux couches diélectriques (22, 24, 26 ; 62, 64, 66, 68), ladite couche fonctionnelle (40) étant disposée entre les deux revêtements antireflet (20, 60), d'une part la couche fonctionnelle (40) étant éventuellement déposée directement sur un revêtement de sous-blocage (30) disposé entre le revêtement antireflet sous-jacent (20) et la couche fonctionnelle (40) et d'autre part la couche fonctionnelle (40) étant éventuellement déposée directement sous un revêtement de sur-blocage (50) disposé entre la couche fonctionnelle (40) et le revêtement antireflet sus-jacent (60), chaque revêtement antireflet (20, 60) comportant au moins une couche diélectrique à haut indice de réfraction (24, 64) qui présente un indice de réfraction mesuré à la longueur d'onde de 550 nm qui est égal ou supérieur 2,2, , d'une part l'épaisseur optique totale e₂ de la couche diélectrique à haut indice de réfraction (24) ou de toutes les couches diélectriques à haut indice de réfraction qui est ou qui sont située(s) dans le revêtement antireflet sous-jacent (20) représentant entre 30 et 75 % de l'épaisseur optique totale e₂₀ de ce revêtement antireflet sous-jacent (20) et d'autre part l'épaisseur optique totale e₆ de la couche diélectrique à haut indice de réfraction (64) ou de toutes les couches diélectriques à haut indice de réfraction qui est ou qui sont située(s) dans le revêtement antireflet sus-jacent (60) représentant entre 10 et 60 % de l'épaisseur optique totale e₆₀ de ce revêtement antireflet sus-jacent (60), chaque épaisseur optique étant le produit de l'épaisseur physique de la couche avec son indice de réfraction mesuré à 550 nm, ***caractérisé en ce que*** chaque revêtement antireflet (20, 60) comporte au moins une couche diélectrique à haut indice de réfraction (24, 64) qui est située au contact ou à proximité de la couche fonctionnelle (40) avec une épaisseur physique de la ou de toutes les couches interposées entre la couche à haut indice de réfaction et la couche fonctionnelle métallique qui n'excède pas 10 nm.

2. Substrat (10) selon la revendication 1, ***caractérisé en ce que*** la matière à haut indice de réfraction des couches diélectriques à haut indice de réfraction (24, 64) est majoritairement dans le revêtement diélectrique (20) sous-jacent à la couche fonctionnelle métallique (40) de telle sorte que le rapport R = e₂ / e₆, de l'épaisseur optique totale e₂ de la couche diélectrique à haut indice de réfraction (24) ou de toutes les couches diélectriques à haut indice de réfraction qui est ou qui sont située(s) dans le revêtement antireflet sous-jacent (20) sur l'épaisseur optique totale e₆ de la couche diélectrique à haut indice de réfraction (64) ou de toutes les couches diélectriques à haut indice de réfraction qui est ou qui sont située(s) dans le revêtement antireflet sus-jacent (60) est compris entre 1,1 et 5 en incluant ces valeurs, voire entre 1,2 et 4 en incluant ces valeurs.

3. Substrat (10) selon la revendication 1 ou 2, ***caractérisé en ce que*** la matière constitutive de chaque couche diélectrique à haut indice de réfraction (24, 64) est choisi parmi : l'oxyde de titane, l'oxyde de niobium, le nitrure de silicium dopé au zirconium et éventuellement en outre à l'aluminium.

4. Substrat (10) selon l'une quelconque des revendications 1 à 3, ***caractérisé en ce que*** le rapport E de l'épaisseur optique e₂₀ en nm du revêtement antireflet sous-jacent (20) sur l'épaisseur optique e₆₀ en nm du revêtement antireflet sus-jacent (60) est tel que : 0,4 ≤ E ≤ 0,9, voire 0,5 ≤ E ≤ 0,8.

5. Substrat (10) selon l'une quelconque des revendications 1 à 4, ***caractérisé en ce que*** lesdits revêtements antireflet sous-jacent (20) et antireflet sus-jacent (60) comportent chacun au moins une couche diélectrique (22, 66) à base de nitrure de silicium, éventuellement dopé à l'aide d'au moins un autre élément, comme l'aluminium.

6. Substrat (10) selon l'une quelconque des revendications 1 à 5, ***caractérisé en ce que*** la dernière couche du revêtement antireflet sous-jacent (20), celle la plus éloignée du substrat, est une couche de mouillage (26) à base d'oxyde, notamment à base d'oxyde de zinc, éventuellement dopé à l'aide d'au moins un autre élément, comme l'aluminium.

7. Substrat (10) selon l'une quelconque des revendications 1 à 6, ***caractérisé en ce que*** le revêtement antireflet sous-jacent (20) comprend au moins une couche diélectrique (22) à base de nitrure, notamment de nitrure de silicium et/ou de nitrure d'aluminium et au moins une couche de lissage (24) non cristallisée en un oxyde mixte, ladite couche de lissage (24) étant en contact avec une couche de mouillage (26) sus-jacente cristallisée.

8. Substrat (10) selon l'une quelconque des revendications 1 à 7, ***caractérisé en ce que*** la dernière couche du revêtement antireflet sus-jacent (60), celle la plus éloignée du substrat, est à base d'oxyde, déposée de préférence sous stoechiométrique, et notamment est à base de d'oxyde de titane (TiOₓ) ou à base d'oxyde mixte de zinc et d'étain (SnZnOₓ).

9. Vitrage (1) incorporant au moins un substrat (10) selon l'une quelconque des revendications 1 à 8, éventuellement associé à au moins un autre substrat.

10. Vitrage (1) selon la revendication 9 monté en monolithique ou en vitrage multiple du type double-vitrage ou triple vitrage ou vitrage feuilleté, ***caractérisé en ce qu'au*** moins le substrat porteur de l'empilement est bombé et/ou trempé.

11. Vitrage (1) selon la revendication 9 ou 10 monté en double-vitrage, ***caractérisé en ce qu'il*** présente une sélectivité S ≥ 1,3 voire S ≥ 1,4, ou S ≥ 1,5.

12. Utilisation du substrat selon l'une quelconque des revendications 1 à 8, pour réaliser une électrode transparente d'un vitrage chauffant ou d'un vitrage électrochrome ou d'un dispositif d'éclairage ou d'un dispositif de visualisation ou d'un panneau photovoltaïque.

## Patentansprüche

1. Transparentes Substrat (10), auf einer Hauptfläche mit mehrlagigen dünnen Schichten beschichtet, umfassend eine einzelne funktionelle metallische Schicht (40) mit Reflektionseigenschaften im Infrarot- und/oder Sonnenstrahlenbereich, insbesondere auf Basis von Silber oder einer silberhaltigen Metalllegierung, und zwei Antireflexbeschichtungen (20, 60), wobei die Beschichtungen jeweils mindestens zwei dielektrische Schichten umfassen (22, 24, 26; 62, 64, 66, 68), wobei die funktionelle Schicht (40) zwischen den zwei Antireflexbeschichtungen (20, 60) angeordnet ist, wobei einerseits die funktionelle Schicht (40) möglicherweise direkt auf einer nach unten hin blockierenden Beschichtung (30) angeordnet ist, die zwischen der darunterliegenden Antireflexbeschichtung (20) und der funktionellen Schicht (40) angeordnet ist, und andererseits die funktionelle Schicht (40) möglicherweise direkt unter einer nach oben hin blockierenden Beschichtung (50) angeordnet ist, die zwischen der funktionellen Schicht (40) und der darüberliegenden Antireflexbeschichtung (60) angeordnet ist, wobei jede Antireflexbeschichtung (20, 60) mindestens eine dielektrische Schicht mit hohem Brechungsindex (24, 64) umfasst, die einen bei der Wellenlänge von 550 nm gemessenen Brechungsindex aufweist, der höher als oder gleich 2,2 ist, wobei einerseits die optische Gesamtdicke e₂ der dielektrischen Schicht mit hohem Brechungsindex (24) oder aller dielektrischen Schichten mit hohem Brechungsindex, die sich in der darunterliegenden Antireflexbeschichtung (20) befindet bzw. befinden, 30 bis 75 % der optischen Gesamtdicke e₂₀ dieser darunterliegenden Antireflexbeschichtung (20) ausmacht und wobei andererseits die optische Gesamtdicke e₆ der dielektrischen Schicht mit hohem Brechungsindex (64) oder aller dielektrischen Schichten mit hohem Brechungsindex, die sich in der darüberliegenden Antireflexbeschichtung (60) befindet bzw. befinden, 10 bis 60 % der optischen Gesamtdicke e₆₀ dieser darüberliegenden Antireflexbeschichtung (60) ausmacht, wobei jede optische Dicke das Produkt der physischen Dicke der Schicht mit ihrem bei 550 nm gemessenen Brechungsindex ist, ***dadurch gekennzeichnet, dass*** jede Antireflexbeschichtung (20, 60) mindestens eine dielektrische Schicht mit hohem Brechungsindex (24, 64) umfasst, die sich in Kontakt mit oder in der Nähe der funktionellen Schicht (40) mit einer physischen Dicke der oder aller zwischen der Schicht mit hohem Brechungsindex und der metallischen funktionellen Schicht befindlichen Schichten, die 10 nm nicht überschreitet, befindet.

2. Substrat (10) nach Anspruch 1, ***dadurch gekennzeichnet, dass*** sich das Material mit hohem Brechungsindex der dielektrischen Schichten mit hohem Brechungsindex (24, 64) mehrheitlich in der unter der metallischen funktionellen Schicht (40) liegenden dielektrischen Beschichtung (20) befindet, sodass das Verhältnis R = e₂ / e₆, der optischen Gesamtdicke e₂ der dielektrischen Schicht mit hohem Brechungsindex (24) oder aller dielektrischen Schichten mit hohem Brechungsindex, die sich in der darunterliegenden Antireflexbeschichtung (20) befindet bzw. befinden, zur optischen Gesamtdicke e₆ der dielektrischen Schicht mit hohem Brechungsindex (64) oder aller dielektrischen Schichten mit hohem Brechungsindex, die sich in der darüberliegenden Antireflexbeschichtung (60) befindet bzw. befinden, 1,1 bis 5 einschließlich dieser Werte bzw. 1,2 bis 4 einschließlich dieser Werte beträgt.

3. Substrat (10) nach Anspruch 1 oder 2, ***dadurch gekennzeichnet, dass*** die Materialbeschaffenheit jeder dielektrischen Schicht mit hohem Brechungsindex (24, 64) ausgewählt ist aus: Titanoxid, Niobiumoxid, Zirconiumdotiertem und möglicherweise noch Aluminium-dotiertem Siliciumnitrid.

4. Substrat (10) nach einem der Ansprüche 1 bis 3, ***dadurch gekennzeichnet, dass*** das Verhältnis E der optischen Dicke e₂₀ in nm der darunterliegenden Antireflexbeschichtung (20) zur optischen Dicke e₆₀ in nm der darüberliegenden Antireflexbeschichtung (60) wie folgt lautet: 0,4 ≤ E ≤ 0,9 bzw. 0,5 ≤ E ≤ 0,8.

5. Substrat (10) nach einem der Ansprüche 1 bis 4, ***dadurch gekennzeichnet, dass*** die darunterliegenden Antireflexbeschichtungen (20) und darüberliegenden Antireflexbeschichtungen (60) jeweils mindestens eine dielektrische Schicht (22, 66) umfassen, die auf Siliciumnitrid basiert, das möglicherweise mithilfe mindestens eines weiteren Elements wie dem Aluminium dotiert ist.

6. Substrat (10) nach einem der Ansprüche 1 bis 5, ***dadurch gekennzeichnet, dass*** die letzte Schicht der darunterliegenden Antireflexbeschichtung (20), die am weitesten vom Substrat entfernt ist, eine Benetzungsschicht (26) auf Basis von Oxid, insbesondere Zinkoxid, ist, das möglicherweise mithilfe mindestens eines weiteren Elements wie dem Aluminium dotiert ist.

7. Substrat (10) nach einem der Ansprüche 1 bis 6, ***dadurch gekennzeichnet, dass*** die darunterliegende Antireflexbeschichtung (20) mindestens eine dielektrische Schicht (22) auf Nitridbasis, insbesondere Siliciumnitrid und/oder Aluminiumnitrid, und mindestens eine nichtkristallisierte Glättungsschicht (24) in einem gemischten Oxid umfasst, wobei die Glättungsschicht (24) in Kontakt mit einer darüberliegenden kristallisierten Benetzungsschicht (26) steht.

8. Substrat (10) nach einem der Ansprüche 1 bis 7, ***dadurch gekennzeichnet, dass*** die letzte Schicht der darüberliegenden Antireflexschicht (60), die am weitesten vom Substrat entfernt ist, auf Oxid, das bevorzugt unterstöchiometrisch angeordnet ist, und insbesondere auf Titanoxid (TiOₓ) oder auf einem Gemisch aus Zink- und Zinnoxid (SnZnOₓ) basiert.

9. Verglasung (1), umfassend mindestens ein Substrat (10) nach einem der Ansprüche 1 bis 8, möglicherweise verbunden mit mindestens einem weiteren Substrat.

10. Verglasung (1) nach Anspruch 9, monolithisch oder in Mehrfachverglasung vom Typ Doppelverglasung oder Dreifachverglasung oder Verbundverglasung montiert, ***dadurch gekennzeichnet, dass*** mindestens das Trägersubstrat des Schichtaufbaus gebogen und/oder gehärtet ist.

11. Verglasung (1) nach Anspruch 9 oder 10, als Doppelverglasung montiert, ***dadurch gekennzeichnet, dass*** sie eine Selektivität S ≥ 1,3 bzw. S ≥ 1,4 oder S ≥ 1,5 aufweist.

12. Verwendung des Substrats nach einem der Ansprüche 1 bis 8 zur Ausführung einer transparenten Elektrode einer beheizten Verglasung oder einer elektrochromen Verglasung oder einer Beleuchtungsvorrichtung oder einer Anzeigevorrichtung oder eines Solarmoduls.

## Claims

1. A transparent substrate (10) provided on a main face with a thin-film multilayer coating comprising a sole metallic functional layer (40) having reflection properties in the infrared and/or in solar radiation, especially based on silver or a metal alloy containing silver, and two antireflection films (20, 60), said films each comprising at least two dielectric layers (22, 24, 26; 62, 64, 66, 68), said functional layer (40) being placed between the two antireflection films (20, 60), on the one hand the functional layer (40) being optionally deposited directly on an underblocker film (30) placed between the subjacent antireflection film (20) and the functional layer (40) and, on the other hand, the functional layer (40) being optionally deposited directly beneath an overblocker film (50) placed between the functional layer (40) and the superjacent antireflection film (60), each antireflection film (20, 60) including at least one high-refractive-index dielectric layer (24, 64) which has a refractive index measured at a wavelength of 550 nm which is equal to or greater than 2.2, on the one hand, the total optical thickness e₂ of the high-refractive-index dielectric layer (24) or of all of the high-refractive-index dielectric layers which is or are located in the subjacent antireflection film (20) representing between 30 and 75% of the total optical thickness e₂₀ of this subjacent antireflection film (20) and, on the other hand, the total optical thickness e₆ of the high-refractive-index dielectric layer (64) or of all of the high-refractive-index dielectric layers which is or are located in the superjacent antireflection film (60) represents between 10 and 60% of the total optical thickness e₆₀ of this superjacent antireflection film (60), each optical thickness being the product of the physical thickness of the layer with its refractive index measured as usual at 550 nm, ***characterized in that*** each antireflection film (20, 60) includes at least one high-refractive-index dielectric layer (24, 64) which is located in contact with or close to the functional layer (40) without the physical thickness of the layer, or of all of the layers, interposed between the high-refractive-index layer and the metallic functional layer exceeding 10 nm.

2. The substrate (10) as claimed in claim 1, ***characterized in that*** the high-refractive-index material of the high-refractive-index dielectric layers (24, 64) is predominantly in the dielectric film (20) subjacent to the metallic functional layer (40) in such a way that the ratio R = e₂/e₆ of the total optical thickness e₂ of the high-refractive-index dielectric layer (24) or of all of the high-refractive-index dielectric layers which is or are located in the subjacent antireflection film (20) to the total optical thickness e₆ of the high-refractive-index dielectric layer (64) or of all of the high-refractive-index dielectric layers which is or are located in the superjacent antireflection film (60) is between 1.1 and 5 including these values, or else between 1.2 and 4 including these values.

3. The substrate (10) as claimed in claim 1 or 2, ***characterized in that*** the constituent material of each high-refractive-index dielectric layer (24, 64) is chosen from: titanium oxide, niobium oxide or silicon nitride doped with zirconium and optionally also with aluminum.

4. The substrate (10) as claimed in any one of claims 1 to 3, ***characterized in that*** the ratio E of the optical thickness e₂₀ in nm of the subjacent antireflection film (20) to the optical thickness e₆₀ in nm of the superjacent antireflection film (60) is such that: 0.4 ≤ E ≤ 0.9, or else 0.5 ≤ E ≤ 0.8.

5. The substrate (10) as claimed in any one of claims 1 to 4, ***characterized in that*** said subjacent antireflection film (20) and said superjacent antireflection film (60) each include at least one dielectric layer (22, 66) based on silicon nitride, optionally doped with at least one other element such as aluminum.

6. The substrate (10) as claimed in any one of claims 1 to 5, ***characterized in that*** the final layer or overcoat of the subjacent antireflection film (20), that furthest away from the substrate, is an oxide-based wetting layer (26), especially one based on zinc oxide, optionally doped with at least one other element such as aluminum.

7. The substrate (10) as claimed in any one of claims 1 to 6, ***characterized in that*** the subjacent antireflection film (20) includes at least one nitride-based dielectric layer (22), especially based on silicon nitride and/or aluminum nitride, and at least one noncrystalline smoothing layer (24) made of a mixed oxide, said smoothing layer (24) being in contact with a crystalline superjacent wetting layer (26).

8. The substrate (10) as claimed in any one of claims 1 to 7, ***characterized in that*** the final layer or overcoat of the superjacent antireflection film (60), that furthest away from the substrate, is based on an oxide, preferably deposited substoichiometrically, and especially is based on titanium oxide (TiOₓ) or based on a mixed tin zinc oxide (SnZnOₓ).

9. Glazing (1) incorporating at least one substrate (10) as claimed in any one of claims 1 to 8, optionally combined with at least one other substrate.

10. The glazing (1) as claimed in claim 9, mounted as a monolithic unit or as a multiple-glazing unit, of the double-glazing or triple-glazing or laminated-glazing type, ***characterized in that*** at least the substrate bearing the multilayer coating is bent and/or tempered.

11. The glazing (1) as claimed in claim 9 or 10, mounted as a double-glazing unit, ***characterized in that*** it has a selectivity S ≥ 1.3 or even S ≥ 1.4 or S ≥ 1.5.

12. The use of the substrate as claimed in any one of claims 1 to 8, for producing a transparent electrode of heating glazing or of electrochromic glazing or of a lighting device or of a display device or of a photovoltaic panel.
